# FASCICULE DE BREVET EUROPEEN

(11) **EP 0 500 405 B1**
(45) Date de publication et mention de la délivrance du brevet: **15.06.1994**
(21) Numéro de dépôt: 92400212.4
(22) Date de dépôt: 28.01.1992
(51) Int. Cl.: B23Q 1/24, B24B 13/005

(54) **Organe de serrage et de préhension**
Einrichtung zum Klemmen und Greifen
Cramping and grasping device

(30) Priorité: 18.02.1991 FR 9101898
(43) Date de publication de la demande: 26.08.1992
(73) Titulaire: ESSILOR INTERNATIONAL, Compagnie Générale d'Optique, F-94028 Créteil Cédex (FR)
(72) Inventeur: Fassler, Georges, F-94220 Charenton le Pont (FR)
(74) Mandataire: Hirsch, Marc-Roger

(56) Documents cités:
- DE-U- 8 623 648
- GB-A- 2 089 707
- US-A- 2 160 378

## Description

La présente invention se rapporte à un organe de serrage et de préhension d'une pièce de forme générale circulaire, comprenant un corps central sur lequel sont montés trois éléments de serrage et de préhension susceptibles de s'appuyer tangentiellement sur ladite pièce par trois points ou zones de tangence formant deux à deux des angles supérieurs à 90°, l'un des éléments de serrage étant disposé selon l'axe du corps central sur une extrémité d'un poussoir central mobile, les deux autres éléments étant disposés symétriquement par rapport audit axe à l'extrémité distale de deux leviers formés chacun d'un bras de serrage et d'un bras d'actionnement, chacun de ces leviers étant articulé par les extrémités associées desdits bras sur un arbre d'appui du corps central.

Les organes de préhension de pièces sont de plus en plus utilisés pour les robots industriels et sont le plus souvent constitués de simples pinces dont les mors viennent serrer fermement une pièce métallique résistante, par l'action d'une pression de fluide. Un exemple d'un organe de serrage et de préhension pour une pièce circulaire est par exemple donné dans GB-A-2 089 707. Selon ce document, un corps central porte un poussoir central et deux leviers rotatifs, ces trois éléments étant actionnés simultanément par un vérin axial à fluide, au serrage comme au desserrage.

Les dispositifs de serrage et de préhension connus sont en général destinés à manipuler des pièces métalliques à usiner qui sont résistantes et sur lesquelles il est possible d'appliquer des efforts de serrage importants garantissant une bonne prise des pièces à manipuler. Lorsqu'on envisage de manipuler des pièces en forme de disque, telles que des verres de lunettes en un matériau fragile et cassant, l'expérience montre que les pinces et organes de préhension connus ne donnent généralement pas satisfaction. Ils présentent notamment le risque d'un décrochage de la pièce lors d'un relâchement accidentel de la pression de fluide de serrage. De plus, ils ne permettent pas toujours d'assurer, au moment de la prise, un centrage correct de la pièce qui risque en permanence le décrochage par basculement.

L'un des buts de la présente invention est précisément de proposer un organe de préhension qui évite les inconvénients précités et qui assure, outre une prise bien centrée pour une pièce à manipuler en forme de disque, une action de serrage permanente, sans avoir à faire intervenir une action de serrage extérieure, par exemple par une pression de fluide, le desserrage seul étant soumis à l'action d'une pression de fluide.

La présente invention a pour objet un organe de serrage et de préhension comme mentioné au début dans lequel le poussoir est sollicité par au moins un ressort de serrage dans la direction axiale de serrage, l'extrémité du poussoir opposée à l'élément de serrage est solidaire d'un premier piston susceptible d'être actionné à l'encontre dudit ressort de serrage et chaque bras d'actionnement est coudé par rapport au bras de serrage et est sollicité en rotation dans la direction de serrage par au moins un ressort de levier.

Selon une forme d'exécution de l'organe de serrage et de préhension précité, les bras d'actionnement desdits leviers sont chacun sollicités par le ressort de levier en une position intermédiaire entre leur axe d'appui et leur extrémité libre qui est engagée dans une rainure d'un manchon annulaire entourant au moins partiellement ledit poussoir.

Selon une autre forme d'exécution de l'organe de serrage et de préhension précité, l'extrémité dudit manchon opposée à la rainure est associée à un deuxième piston susceptible d'être actionné à l'encontre des deux ressorts de levier.
Ainsi, chacun des bras de serrage est ainsi actionné indépendamment par son ressort de levier mais les deux bras sont couplés par le manchon annulaire qui sert à guider le poussoir central susceptible de se déplacer axialement pour appliquer en permanence la pièce circulaire à serrer dans une position presque diamétrale entre les deux éléments de serrage des leviers.

Chaque élément de serrage et de préhension étant commandé au serrage par son propre ressort, les éléments de serrage s'appliquent à des instants successifs au cours du serrage en améliorant ainsi la sécurité de la saisie de la pièce.

Selon encore un autre mode de réalisation de l'organe de serrage et de préhension, l'effort de réaction des deux ressorts de levier appliqué au manchon annulaire est nettement supérieur à l'effort de réaction du ressort de serrage appliqué au poussoir. Une telle disposition permet de faire intervenir les bras de serrage avant l'élément de serrage porté par le poussoir.

Selon un autre mode de réalisation de l'organe de préhension selon l'invention, le manchon annulaire présente un alésage cylindrique dans lequel se déplace, de façon étanche, le poussoir qui traverse le deuxième piston.

Selon une autre forme encore d'exécution de l'organe de serrage et de préhension précité, le poussoir est relié au premier piston par une tige creuse dans laquelle est logé, au moins partiellement, le ressort de serrage constitué par un ressort hélicoïdal de compression en appui à l'une de ses extrémités sur le fond du corps central et à son autre extrémité sur le poussoir.

Suivant encore une autre forme d'exécution de l'organe de serrage et de préhension précité, le manchon annulaire porte un ergot ou une tige engagé dans une rainure axiale du poussoir central.

Suivant un mode de réalisation de l'organe de serrage et de préhension selon l'invention, chaque ressort de levier est un ressort hélicoïdal de traction dont une extrémité est accrochée au bras d'actionnement tandis que son autre extrémité est accrochée à une partie en saillie du fond du corps central.

Suivant un autre mode de réalisation de l'organe de serrage et de préhension selon l'invention, le premier et le deuxième pistons sont disposés dans le même alésage cylindrique du corps central de façon à délimiter, dans ledit alésage cylindrique, entre les deux pistons et à l'extérieur de la tige creuse, une chambre annulaire de fluide susceptible d'être alimentée en fluide sous pression de desserrage. Cette disposition compacte permet de prévoir deux pistons de desserrage distincts, respectivement pour l'élément de serrage central et pour les éléments de serrage disposés latéralement sur les leviers, en n'utilisant qu'un seul alésage et une seule chambre de desserrage. Les éléments de serrage latéraux peuvent ainsi être libérés après l'élément de serrage central en n'utilisant cependant qu'une seule chambre de fluide, selon une disposition très compacte.

Suivant un autre mode de réalisation encore de l'organe de serrage et de préhension selon l'invention, chaque extrémité libre des bras de serrage des leviers porte un patin revêtu d'une plaque d'élastomère d'appui tangentiel sur la pièce et articulé à l'extrémité dudit bras de serrage.

Suivant encore un autre mode de réalisation de l'organe de serrage selon l'invention, chaque patin est articulé à l'extrémité d'une biellette dont l'autre extrémité est articulée sur le corps central, de manière à déterminer une orientation du patin pour toutes les positions du bras de serrage.

Suivant un autre mode de réalisation de l'organe de serrage selon l'invention, l'élément de serrage central, monté à l'extrémité du poussoir, comporte un mors central articulé sur lequel sont montés, latéralement de chaque côté, deux mors susceptibles de s'effacer par rotation par rapport au mors central, les garnitures de contact en élastomère des mors extérieurs étant disposées pour tangenter des pièces de grand diamètre et les garnitures de contact en élastomère des mors intérieurs étant disposées pour tangenter des pièces de petit diamètre, de manière à appliquer sur les pièces de grand diamètre le mors central et les mors extérieurs, et sur les pièces de petit diamètre, le mors central et les deux mors intérieurs.

D'autres buts, avantages et caractéristiques apparaîtront à la lecture de la description d'un mode de réalisation de l'invention, faite à titre non limitatif et en regard du dessin annexé, dans lequel:
- la figure 1 représente en coupe axiale, selon la ligne I-I à la figure 3, l'organe de serrage et de préhension selon l'invention, appliqué à une pièce cylindrique de grand diamètre;
- la figure 2 représente, selon la même coupe axiale et à un peu plus grande échelle, le dispositif de serrage et de préhension selon l'invention appliqué à une pièce cylindrique de petit diamètre, les bras des éléments de serrage n'étant pas représentés en coupe mais en vue de dessus;
- la figure 3 représente, à plus petite échelle, la coupe selon la ligne III-III des figures 1 et 2;
- les figures 4a et 4b représentent schématiquement un mode de réalisation simplifié de l'organe de serrage et de préhension selon l'invention, la figure 4a correspondant à la position ouverte et la figure 4b à la position fermée sur une pièce cylindrique de petit diamètre.

L'organe de serrage et de préhension, que l'on appelle également en termes courants pince, est destiné à manipuler des pièces 1, 1a de forme générale circulaire ou de révolution qui se présentent, par exemple, sous la forme de disques de verre ou de matière plastique transparent à usiner pour former des lentilles ou des verres de lunettes. L'organe de serrage est constitué d'éléments assemblés sur un corps central 2 réalisé sous la forme d'un cylindre 3 dont le fond arrière 4 est traversé par des ergots ou clavettes 5 d'assemblage et d'accrochage de ressorts de traction. Le fond avant 6 du cylindre 3 porte, sur des prolongements extérieurs, des arbres 7 formant point d'appui de leviers extérieurs rotatifs 8 et 9 à deux bras.

Le serrage des pièces 1 ou la est obtenu à l'aide de trois éléments de serrage ou mors 10, 11, 12 qui sont chacun susceptibles de s'appuyer tangentiellement sur la pièce 1 ou la en trois points ou zones de tangence 13, 14, 15 en formant, deux à deux, des angles supérieurs à 90°, ce qui assure le blocage en position de la pièce 1 à contour cylindrique entre les éléments de serrage. On remarquera que si l'on trace l'axe longitudinal 16 du corps central et du cylindre 3 et la ligne diamétrale 17 de la pièce 1 qui est perpendiculaire à cet axe 16 et passe par le centre O de la pièce 1, les zones de tangence 14 et 15 viennent se placer légèrement au-delà de la ligne diamétrale 17 par rapport au corps central 2. Cette disposition a pour conséquence que la pièce 1 ou la peut, grâce à l'adhérence importante sur les zones de tangence 14 et 15, être maintenue en position par les seuls éléments de serrage 11 et 12 sans s'échapper en direction de l'élément de serrage 10. La position des zones de tangence 14 et 15 empêche, par contre, la pièce 1 ou la de s'échapper vers l'extérieur et garantit un centrage entre les éléments de serrage ou mors 11 et 12 quel que soit le diamètre de la pièce entre un maximum pour la pièce 1 et un minimum pour la pièce 1a.

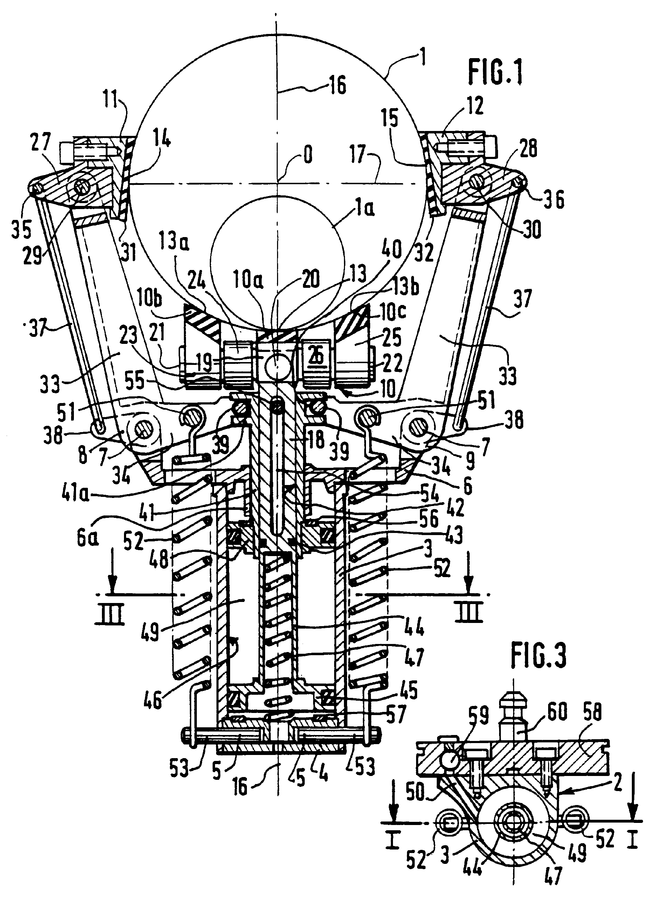

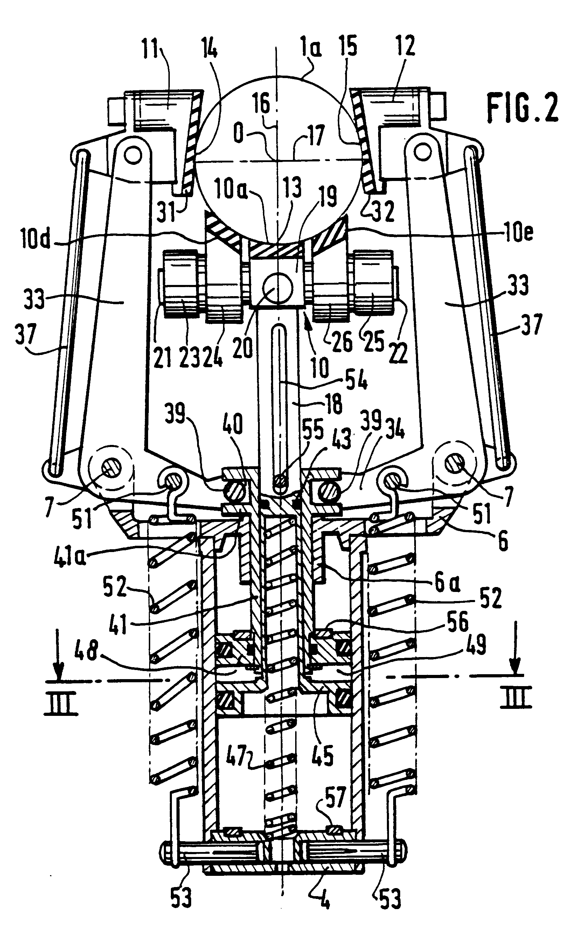

L'élément de serrage 10 est disposé selon l'axe 16 du corps central à l'extrémité d'un poussoir 18 et peut comporter plusieurs mors qui sont représentés en vue extérieure, à l'exception de leur garniture en élastomère 10a à 10e représentée en coupe. Le mors central 19 de l'élément de serrage 10 est articulé sur le poussoir 18 par un arbre 20 et porte latéralement, monté à friction de chaque côté sur un arbre de support 21, 22 transversal à l'arbre 20, un jeu de deux mors, respectivement 23, 24 et 25, 26. Les mors extérieurs 23, 25 qui présentent des garnitures en élastomère 10b et 10c, aptes à tangenter des pièces de grand diamètre 1, sont utilisés pour les pièces de grand diamètre tandis que les mors intérieurs 24 et 26 qui présentent des garnitures en élastomère 10d et 10e (voir la figure 2), aptes à tangenter des pièces de petit diamètre, sont repliés perpendiculairement au plan de coupe de la figure 1, comme représenté sur la figure 1. Les mors intérieurs 24 et 26 sont utilisés pour les pièces de petit diamètre la tandis que les mors extérieurs 23 et 25 sont repliés, comme représenté sur la figure 2. Le centrage de la pièce 1 ou la sur l'élément de serrage 10 est ainsi optimal malgré les risques d'écrasements différents des garnitures en élastomère 10a à 10e.

Les éléments de serrage 11 et 12 sont montés sur les leviers rotatifs 8 et 9 en formant un patin 27, 28 articulé par un arbre 29, 30 sur une extrémité libre du bras 8, 9. Les éléments de serrage 11 et 12 portent, comme les mors de l'élément 10, des garnitures en élastomère 31, 32 de contact avec la pièce 1, 1a. Les leviers 8 et 9 comportent chacun un bras de serrage 33 portant, à son extrémité, l'élément de serrage 11 ou 12 et un bras d'actionnement 34. Chaque patin 27 ou 28 est articulé à l'extrémité 35, 36 d'une biellette 37 dont l'autre extrémité est articulée sur un prolongement 38 du fond avant 6 et donc du corps central 2. Lorsque les leviers 8 et 9 tournent, la position du patin 27 ou 28 est ainsi bien déterminée. De plus, les patins 27 et 28 et donc les garnitures en élastomère 31 et 32 qu'ils portent, sont plus inclinés pour les pièces de grand diamètre pour lesquelles il importe de réaliser une plus grande retenue axiale.

Les bras d'actionnement 34 des leviers 8 et 9 sont munis à leur extrémité libre d'un axe 39 engagé dans une rainure droite 40 d'un manchon annulaire 41 qui entoure le poussoir 18 et qui est guidé axialement mobile dans un palier 6a du fond avant 6 du cylindre 3. Le poussoir 18 traverse, de façon étanche, un alésage cylindrique 42 du manchon 41 grâce à un joint annulaire d'étanchéité 43 et se prolonge par un tube creux 44 terminé par un premier piston 45, mobile de façon étanche dans l'alésage intérieur 46 du cylindre 3. Un ressort hélicoïdal de compression 47, logé pour la plus grande partie à l'intérieur du tube creux 44, est interposé entre le fond 4 du cylindre 3 et le poussoir 18, au fond du tube creux 44, et repousse le poussoir 18 et donc l'élément de serrage 10, dans la direction de serrage.

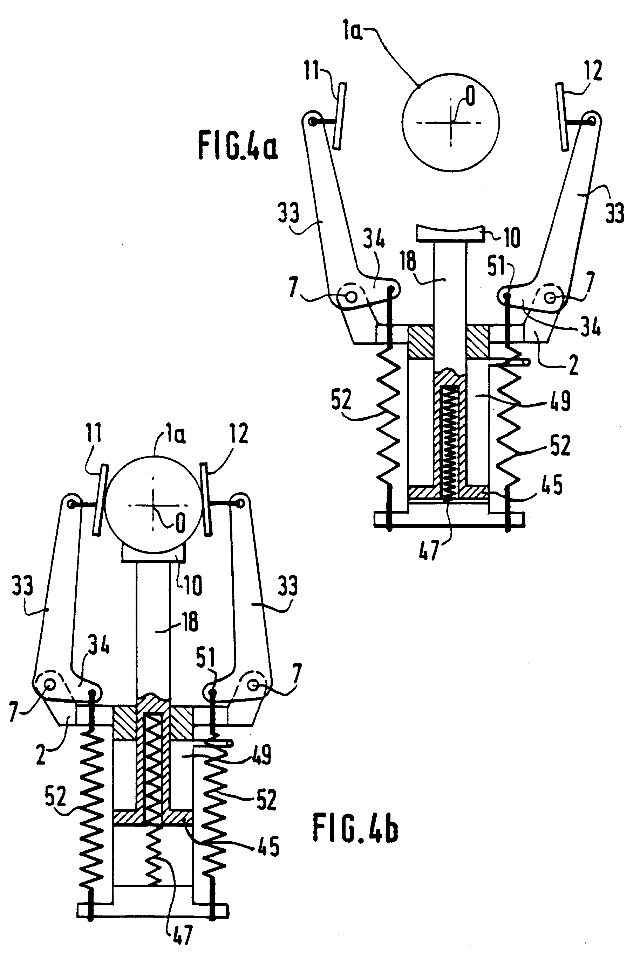

Le manchon annulaire 41 qui se déplace de façon étanche autour du poussoir 18 porte, à son extrémité opposée à la rainure 40, un deuxième piston 48 qui se déplace de façon étanche dans l'alésage 46 du cylindre 3. Le premier piston 45 et le deuxième piston 48 délimitent ainsi dans l'alésage cylindrique 46, entre eux et à l'extérieur de la tige creuse 44, une chambre annulaire de fluide 49. La chambre de fluide 49 est susceptible d'être alimentée en fluide sous pression, par exemple par de l'air comprimé, par l'intermédiaire d'un canal 50 (voir la figure 3) débouchant latéralement dans l'espace 49 laissé libre entre les deux pistons les plus rapprochés possible (voir la figure 2), c'est-à-dire sensiblement dans le plan de coupe III-III des figures 1 et 2.

Chaque bras d'actionnement 34 des leviers 8 et 9 est coudé presque à angle droit par rapport au bras de serrage 33 et porte, à peu près à mi-distance entre l'arbre d'appui 7 et l'axe d'extrémité 39, un axe transversal 51 auquel est accrochée l'extrémité en crochet d'un ressort de levier 52, agencé en ressort hélicoïdal de traction. L'autre extrémité en crochet du ressort de levier 52 est accrochée à l'ergot dépassant 53 de la clavette d'assemblage 5 du fond arrière 4 du cylindre 3.

Le poussoir 18 comporte une rainure axiale 54 qui est traversée par une tige ou un ergot 55 portée par l'extrémité avant du manchon annulaire 41. On remarquera par ailleurs que des butées de fin de course en élastomère sont prévues pour l'arrêt des pistons qui se déplacent sous l'effet de la pression de fluide régnant dans la chambre 49. Une butée annulaire en élastomère 56 est disposée sur le deuxième piston 48 pour venir en contact avec l'extrémité du palier 6a du fond avant 6. Une butée annulaire 57 est disposée sur le fond arrière 4 du cylindre 3 pour venir en contact avec le premier piston 45.

En considérant la figure 3, on voit que le corps de cylindre 3 formant le corps central 2 est boulonné sur une plaque de base 58 qui porte un canal axial 59 d'alimentation en fluide sous pression de la chambre de fluide 49 par le canal latéral 50. La plaque de base 58 est solidaire d'une tige de verrouillage 60. Cette tige de verrouillage 60 qui présente une rainure circulaire de verrouillage est disposée perpendiculairement à l'axe du cylindre 3 et sert à accrocher l'organe de préhension à un bras de manoeuvre non représenté.

On va maintenant expliquer le fonctionnement de l'organe de serrage et de préhension qui vient d'être décrit. Avant de serrer une pièce 1 ou 1a, l'organe de serrage est tout d'abord placé en position d'ouverture en alimentant en air comprimé la chambre annulaire 49, ce qui a pour effet de repousser les pistons 45 et 48 à distance l'un de l'autre jusqu'à leur position de butée où le premier piston 45 est en appui sur sa butée annulaire en élastomère 57 et où le deuxième piston 48 applique sa butée annulaire en élastomère 56 sur le bord extérieur du palier 6a du fond avant 6. Cette position de butée extrême est voisine de celle représentée à la figure 1 qui correspond au serrage de la pièce 1 constituée par exemple d'un verre de lunette cylindrique en forme de disque du plus grand diamètre admissible dans la pince. Avant le serrage, le corps de serrage 2 porté par la plaque de base 58 avance, les bras 8, 9 écartés, dans le plan moyen de la pièce 1 jusqu'à ce que le bord de la pièce 1 vienne en contact avec la zone de tangence 13 de l'élément de serrage 10 et, le cas échéant (si les mors supplémentaires 23, 25 existent et ont été placés en position active), avec les zones de tangence 13a, 13b des garnitures en élastomère 10b, 10c des mors 23, 25.

Pour réaliser le serrage, on relie la chambre annulaire de fluide 49 à l'échappement. Alors qu'il reste encore une pression d'air comprimé sensible dans la chambre 49, l'effort de rappel des ressorts de levier 52 est suffisant pour repousser le deuxième piston 48 à l'encontre de la pression d'air comprimé, ce qui permet ainsi aux éléments de serrage 11 et 12 de se refermer sur la pièce 1 et d'amener en contact les zones de tangence 14 et 15 avec la périphérie cylindrique de la pièce 1 en empêchant cette dernière de s'échapper vers l'extérieur. Lorsque la surpression d'air comprimé dans la chambre 49 est presque annulée, le ressort de serrage 47 peut repousser le premier piston 45 et terminer le serrage de la pièce sur trois zones d'appui élastique par l'intermédiaire des garnitures en élastomère des mors. La préhension de la pièce s'effectue ensuite par déplacement de la plaque de base 58 accrochée à un bras de manoeuvre, en transportant la pièce 1 maintenue en position en trois zones par les éléments de serrage 10, 11, 12.

Pour libérer la pièce 1 amenée en position, on alimente à nouveau la chambre annulaire 49 en air comprimé qui repousse d'abord le premier piston 45 sur sa butée 57 en laissant un instant la pièce 3 maintenue en position uniquement par les éléments de serrage 11 et 12. Le serrage des éléments 11 et 12 étant presque diamétral, le frottement important entre les garnitures en élastomère 31 et 32 et la périphérie cylindrique de la pièce 1 évite que cette pièce 1 ne "gicle" en direction de l'élément de serrage 10. Très rapidement, la pression de fluide qui a augmenté dans la chambre annulaire 49 repousse le deuxième piston 48 à l'encontre des ressorts de bras 52 pour rappeler les bras de serrage 33 en position de desserrage et libérer la pièce 1 en position.

Le processus de serrage d'une pièce 1a de petit diamètre est quelque peu différent. On aura tout d'abord placé les mors extrêmes 23 et 25 en position inactive et disposé, le cas échéant, les mors intermédiaires 24 et 26 en position active. Lorsque la pince amenée en position desserrée par la pression d'air comprimé régnant dans la chambre 49 s'avance dans le plan moyen de la pièce 1a, elle vient en contact avec cette dernière dans la position représentée à la figure 1. L'élément de serrage 10 est alors en position de retrait, comme représenté à la figure 1.

Au cours de la purge de la pression d'air comprimé régnant dans la chambre 49, ce sont tout d'abord les bras de serrage 33 qui se referment jusqu'à la venue en butée du rebord 41a (portant la rainure 40) du manchon 41 sur le fond avant 6 du cylindre 3. Cette position de fermeture correspond sensiblement à celle représentée sur la figure 2. A ce stade du serrage des mors, les éléments de serrage et de préhension 11 et 12 occupent sensiblement la position représentée à la figure 2 tandis que l'élément de serrage et de préhension 10 occupe, par rapport à la pièce 1a, la position représentée à la figure 1. La pièce 1a ne peut pas s'échapper car les mors 11 et 12 sont refermés devant elle en lui ouvrant un passage conique de moindre largeur que le diamètre extérieur de la pièce 1a.

La pression de la chambre 49 continuant à diminuer, le ressort de serrage 47 peut alors repousser le premier piston 45 pour ramener le poussoir 18 et l'élément de serrage 10 dans la position représentée à la figure 2 après que la pièce 1a se soit engagée entre les garnitures en élastomère 31 et 32 qui forment une entrée conique et ne les ait repoussé légèrement par un effet d'amplification d'efforts. La pièce 1a est alors venue dans la position représentée à la figure 2 qui est sensiblement la même en ce qui concerne le centre O de la pièce 1a de plus petit diamètre en forme de disque, que celui de la pièce 1 de plus grand diamètre.

Au desserrage, comme pour la pièce de grand diamètre 1, c'est d'abord le poussoir 18 qui recule, repoussé par l'action de la pression sur le premier piston 45. La pièce 1a reste maintenue par le serrage des éléments de serrage 11 et 12 qui agissent presque diamétralement, le frottement important entre les garnitures en élastomère 31 et 32 et la périphérie cylindrique de la pièce 1a empêchant que cette dernière ne "gicle" en direction de l'élément de serrage 10. Lorsque la pression d'air comprimé augmente dans la chambre 49, l'effort de réaction des ressorts de levier 52 est alors surmonté par l'effort de pression exercé sur le premier piston 45 et les éléments de serrage 11 et 12 sont amenés dans la position desserrée représentée à la figure 1, le centre O de la pièce 1a se trouvant alors, pour une même position du corps de serrage 2, disposé sensiblement à la même place que le centre O de la pièce 1.

Pour des pièces de diamètre cylindrique, intermédiaire entre celui des pièces 1 et 1a, on comprendra qu'au serrage, ce sont tout d'abord les éléments de serrage 11 et 12 qui se referment, sensiblement jusqu'à la position représentée à la figure 2. La pièce 1 est ensuite repoussée par le ressort de serrage 47 au contact des garnitures 31 et 32 formant un cône d'entrée. La poussée axiale du ressort de serrage 47 est suffisante pour faire ouvrir, par effet de cône, les éléments de serrage 11 et 12 jusqu'à obtenir un serrage presque diamétral sur la périphérie cylindrique de la pièce 1 et une position d'équilibre en trois points du serrage sur la pièce 1.

Les pièces à serrer et à manipuler présentent en général une forme de disque bombé sur une face, correspondant à un verre de lunette brut ou usiné. Il est évident que l'organe de serrage et de préhension selon l'invention peut être utilisé pour serrer des objets cylindriques ou parallélépipédiques de relativement grande longueur pour lesquels le risque de renversement est moins grand mais où le serrage des mors 10, 11, 12 doit être plus énergique que celui réalisé par les ressorts tels que représentés. L'action de desserrage sur les pistons de desserrage 45 et 48, qui est réalisée dans le mode de réalisation représenté par une pression de fluide, pourrait être remplacée par un autre moyen tel qu'une action électromagnétique.

Pour le mode de réalisation simplifié représenté sur les figures 4a et 4b, on a affecté aux éléments principaux les mêmes numéros de référence que sur les figures 1 à 3. Dans la position d'ouverture représentée à la figure 4a, les éléments de serrage ou mors 11 et 12 sont éloignés l'un de l'autre par une action manuelle et le piston 45 est amené en position basse par une pression de fluide, par exemple de l'air comprimé, régnant dans la chambre annulaire de fluide 49. Le serrage s'effectue d'abord par libération manuelle progressive des mors 11 et 12 qui viennent s'appliquer sur la pièce à serrer 1a placée préalablement entre les mors, en la maintenant provisoirement en position malgré l'angle obtus proche de 180° (par exemple compris entre 160 et 170°) formé entre les deux faces de tangence des mors. En effet, comme indiqué précédemment, le frottement important entre les garnitures en élastomère des mors 11 et 12 et la périphérie cylindrique de la pièce 1a empêche que cette pièce ne "gicle" en direction de l'élément de serrage ou mors 10.

Pour compléter le serrage, il suffit de purger la chambre annulaire 49 de sa pression afin que le ressort 47 puisse repousser le poussoir 18 et le piston 45 en direction de la pièce 1a sur laquelle s'applique alors le mors 10 qui complète le serrage en trois points de la pièce 1a qui est maintenue sensiblement centrée sur le point 0, comme déjà représenté sur les figures 1 et 2.

Pour réaliser le desserrage du mode de réalisation simplifié représenté à l'état serré sur la figure 4b, la chambre annulaire 49 est réalimentée en fluide sous pression, ce qui repousse le piston 45 dans la position représentée à la figure 4a. La pièce 1a reste maintenue en position par les mors 11 et 12 qui sont écartés avec précaution par une action manuelle pour libérer la pièce. Le mode de réalisation simplifié de l'organe de serrage et de préhension ou pince selon l'invention peut être utilisé dans des équipements ne nécessitant que des forces de serrage limitées compatibles avec une action manuelle et des cadences de manipulation réduites compatibles avec un actionnement en partie manuel mais bénéficiant d'un bon centrage et d'un excellent "toucher". On doit comprendre que l'agencement des bras de serrage 33 représenté schématiquement sur les figures 4a et 4b est en fait identique à celui des figures 1 et 2, c'est-à-dire qu'il est réalisé avec des biellettes 37 d'orientation des garnitures en élastomère 31 et 32 selon un angle obtus empêchant l'échappement des pièces 1, la vers l'extérieur.

Bien entendu, la présente invention n'est pas limitée aux modes de réalisation décrits et représentés mais elle est susceptible de nombreuses variantes accessibles à l'homme de l'art dans le cadre des revendications.

## Revendications

1. Organe de serrage et de préhension d'une pièce de forme générale circulaire, comprenant un corps central (2) sur lequel sont montés trois éléments de serrage et de préhension (10, 11, 12) susceptibles de s'appuyer tangentiellement sur ladite pièce en trois points ou zones de tangence (13, 14, 15) formant, deux à deux, des angles supérieurs à 90°, l'un (10) des éléments de serrage étant disposé selon l'axe du corps central (16) sur une extrémité d'un poussoir central mobile (18), les deux autres éléments (11, 12) étant disposés symétriquement par rapport audit axe (16) à l'extrémité distale de deux leviers (8, 9) formés chacun d'un bras de serrage (33) et d'un bras d'actionnement (34), chacun de ces leviers étant articulé par les extrémités associées desdits bras sur un arbre d'appui (7) du corps central, caractérisé en ce que le poussoir (18) est sollicité par au moins un ressort de serrage (47) dans la direction axiale de serrage, en ce que l'extrémité du poussoir (18) opposée à l'élément de serrage (10) est associée à un premier piston (45) susceptible d'être actionné à l'encontre dudit ressort de serrage (47) et en ce que chaque bras d'actionnement (34) est coudé par rapport au bras de serrage (33) et est sollicité en rotation dans la direction de serrage par au moins un ressort de levier (52).

2. Organe de serrage et de préhension selon la revendication 1, caractérisé en ce que les bras d'actionnement (34) desdits leviers (8, 9) sont chacun sollicités par le ressort de levier (52) en une position intermédiaire entre leur axe d'appui (7) et leur extrémité libre qui est engagée dans une rainure (40) d'un manchon annulaire (41) entourant au moins partiellement ledit poussoir (18).

3. Organe de serrage et de préhension selon la revendication 2, caractérisé en ce que l'extrémité dudit manchon (41) opposée à la rainure (40) est associée à un deuxième piston (48) susceptible d'être actionné à l'encontre des deux ressorts de levier (52) et en ce que l'effort de réaction des deux ressorts de levier (52) appliqué au manchon annulaire (41) est nettement supérieur à l'effort de réaction du ressort de serrage (47) appliqué au poussoir (18).

4. Organe de serrage et de préhension selon l'une quelconque des revendications 1 à 3, caractérisé en ce que le poussoir (18) est relié au premier piston (45) par une tige creuse (44) dans laquelle est logé, au moins partiellement, le ressort de serrage (47) constitué par un ressort hélicoïdal de compression en appui à l'une de ses extrémités sur le fond (4) du corps central (2) et à son autre extrémité sur le poussoir (18).

5. Organe de serrage et de préhension selon l'une quelconque des revendications 2 à 4, caractérisé en ce que le manchon annulaire (41) porte un ergot ou une tige (55) engagé dans une rainure axiale (54) du poussoir central (18).

6. Organe de serrage et de préhension selon l'une quelconque des revendications 1 à 5, caractérisé en ce que chaque ressort de levier (52) est un ressort hélicoïdal de traction dont une extrémité est accrochée au bras d'actionnement (34) tandis que son autre extrémité est accrochée à une partie en saillie (53) du fond (4) du corps central (2).

7. Organe de serrage et de préhension selon l'une quelconque des revendications 3 à 6, caractérisé en ce que le manchon annulaire (41) présente un alésage cylindrique (42) dans lequel se déplace, de façon étanche, le poussoir (18) qui traverse le deuxième piston (48) et en ce que le premier et le deuxième pistons (45, 48) sont disposés dans le même alésage cylindrique (46) du corps central (2), de façon à délimiter dans ledit alésage cylindrique (46), entre les deux pistons et à l'extérieur de ladite tige creuse (44), une chambre annulaire de fluide (49) susceptible d'être alimentée en fluide sous pression de desserrage.

8. Organe de serrage et de préhension selon l'une quelconque des revendications 1 à 7, caractérisé en ce que chaque extrémité libre des bras de serrage (33) des leviers (8, 9) porte un patin (27, 28) revêtu d'une plaque d'élastomère (31, 32) d'appui tangentiel (14, 15) sur la pièce (1, 1a) et articulé à l'extrémité dudit bras de serrage (33).

9. Organe de serrage selon la revendication 8, caractérisé en ce que chaque patin (27, 28) est articulé à l'extrémité d'une biellette (37) dont l'autre extrémité est articulée sur le corps central (2), de manière à déterminer une orientation du patin pour toutes les positions du bras de serrage (33).

10. Organe de serrage selon l'une quelconque des revendications 1 à 9, caractérisé en ce que l'élément de serrage central (10), monté à l'extrémité du poussoir (18), comporte un mors central articulé (19) sur lequel sont montés, latéralement de chaque côté, deux mors (23, 24; 25, 26) susceptibles de s'effacer par rotation par rapport au mors central (19), les garnitures de contact en élastomère (10b, 10c) des mors extérieurs (23, 25) étant disposées pour tangenter des pièces de grand diamètre (1) et les garnitures de contact en élastomère (10d, 10e) des mors intérieurs (24, 26) étant disposées pour tangenter des pièces de petit diamètre (1a), de manière à appliquer sur les pièces de grand diamètre (1) le mors central et les mors extérieurs (23, 25), et sur les pièces de petit diamètre (1a), le mors central (19) et les deux mors intérieurs (24, 26).

## Patentansprüche

1. Einrichtung zum Klemmen und Greifen eines Werkstücks von allgemein kreisrunder Gestalt, mit einem zentralen Hauptteil (2), auf dem drei Klemm- und Greiforgane (10, 11, 12) angeordnet sind, die an dem genannten Werkstück in drei Tangentenpunkten oder -bereichen (13, 14, 15), die paarweise Winkel größer als 90° bilden, tangential abstützbar sind, wobei eins (10) der Klemmorgane in der Achse des zentralen Hauptteils (16) auf einem Endstück eines beweglichen zentralen Stößels (18) angeordnet ist, die beiden übrigen Organe (11, 12) symmetrisch zu der genannten Achse (16) am distalen Endstück zweier Hebel (8, 9) angeordnet sind, die je aus einem Klemmarm (33) und einem Betätigungsarm (34) bestehen, wobei jeder dieser Hebel durch die zugehörigen Endstücke der genannten Arme an einer Stützwelle (7) des zentralen Hauptteils angelenkt ist, gekennzeichnet dadurch, daß der Stößel (18) durch wenigstens eine Klemmfeder (47) in axialer Klemmrichtung vorgespannt ist, daß das dem Klemmorgan (10) abgewandte Endstück des Stößels (18) mit einem ersten Kolben (45) verbunden ist, der entgegen der genannten Klemmfeder (47) betätigbar ist, und daß jeder Betätigungsarm (34) in bezug auf den Klemmarm (33) gekröpft ist und durch wenigstens eine Hebelfeder (52) drehend in Klemmrichtung vorgespannt ist.

2. Einrichtung zum Klemmen und Greifen nach Anspruch 1, gekennzeichnet dadurch, daß die Betätigungsarme (34) der genannten Hebel (8, 9) je durch die Hebelfeder (52) in einer Zwischenstellung zwischen ihrer Stützwelle (7) und ihrem freien Endstück, das in eine Nut (40) einer wenigstens zum Teil den genannten Stößel (18) umgebenden ringförmigen Hülse (41) eingreift, vorgespannt werden.

3. Einrichtung zum Klemmen und Greifen gemäß Anspruch 2, gekennzeichnet dadurch, daß das der Nut (40) abgewandte Endstück der genannten Hülse (41) mit einem zweiten Kolben (48) verbunden ist, der gegen die beiden Hebelfedern (52) betätigbar ist, und daß die auf die ringförmige Hülse (41) wirkende Reaktionskraft der beiden Hebelfedern (52) deutlich höher ist als die auf den Stößel (18) wirkende Reaktionskraft der Klemmfeder (47).

4. Einrichtung zum Klemmen und Greifen gemäß einem der Ansprüche 1 bis 3, gekennzeichnet dadurch, daß der Stößel (18) mit dem ersten Kolben (45) durch eine hohle Stange (44) verbunden ist, in der wenigstens zum Teil die von einer Schraubendruckfeder gebildete Klemmfeder (47) angeordnet ist, die sich an ihrem einen Endstück am Boden (4) des zentralen Hauptteils (2) und an ihrem anderen Endstück am Stößel (18) abstützt.

5. Einrichtung zum Klemmen und Greifen gemäß einem der Ansprüche 2 bis 4, gekennzeichnet dadurch, daß die ringförmige Hülse (41) einen Zapfen oder Stift (55) trägt, der in eine axiale Nut (54) des zentralen Stößels (18) eingesetzt ist.

6. Einrichtung zum Klemmen und Greifen gemäß einem der Ansprüche 1 bis 5, gekennzeichnet dadurch, daß jede Hebelfeder (52) eine Schraubenzugfeder ist, von der ein Endstück in den Betätigungsarm (34) eingehängt ist, wogegen ihr anderes Endstück in ein herausragendes Stück (53) des Bodens (4) des zentralen Hauptteils (2) eingehängt ist.

7. Einrichtung zum Klemmen und Greifen gemäß einem der Ansprüche 3 bis 6, gekennzeichnet dadurch, daß die ringförmige Hülse (41) eine zylindrische Bohrung (42) aufweist, in der sich der den zweiten Kolben (48) durchdringende Stößel (18) unter Abdichtung bewegt, und daß der erste und der zweite Kolben (45, 48) in derselben zylindrischen Bohrung (46) des zentralen Hauptteils (2) in der Weise angeordnet sind, daß sie in der genannten zylindrischen Bohrung (46) zwischen den beiden Kolben und außerhalb der genannten hohlen Stange (44) eine ringförmige Fluidkammer (49) begrenzen, die mit einem Lösedruckfluid beaufschlagbar ist.

8. Einrichtung zum Klemmen und Greifen gemäß einem der Ansprüche 1 bis 7, gekennzeichnet dadurch, daß jedes freie Endstück der Klemmarme (33) der Hebel (8, 9) einen mit einer Elastomerplatte (31, 32) bestückten Schuh (27, 28) trägt, der sich am Werkstück tangential abstützt und mit dem Endstück des genannten Klemmarms (33) gelenkig verbunden ist.

9. Einrichtung zum Klemmen gemäß Anspruch 8, gekennzeichnet dadurch, daß jeder Schuh (27, 28) an das Endstück eines Schwingarms (37) angelenkt ist, dessen anderes Endstück so an dem zentralen Hauptteil (2) angelenkt ist, daß eine Ausrichtung des Schuhs für alle Stellungen des Klemmarms (33) festgelegt ist.

10. Einrichtung zum Klemmen gemäß einem der Ansprüche 1 bis 9, gekennzeichnet dadurch, daß das am Endstück des Stößels (18) angeordnete zentrale Klemmorgan (10) eine angelenkte zentrale Backe (19) aufweist, auf der auf jeder Seite seitlich zwei Backen (23, 24; 25, 26) angeordnet sind, die in bezug auf die zentrale Backe (19) drehend wegklappbar sind, wobei die Anlagebeläge aus Elastomer (10b, 10c) der Außenbacken (23, 25) so angebracht sind, daß sie an Werkstücken großen Durchmessers (1) tangential anliegen, und die Anlagebeläge aus Elastomer (10d, 10e) der Innenbacken (24, 26) so angebracht sind, daß sie an Werkstücken kleinen Durchmessers (1a) tangential anliegen, derart, daß an die Werkstücke großen Durchmesser (1) die zentrale Backe und die Außenbacken (23, 25) und an die Werkstücke kleinen Durchmessers (1a) die zentrale Backe (19) und die beiden Innenbacken (24, 26) angelegt werden.

## Claims

1. A device for grasping and clamping a generally circular-shaped workpiece, comprising a central body (2) on which three clamping and grasping elements (10, 11, 12) are mounted said elements being adapted to bear tangentially on said workpiece at three points or regions of tangency (13, 14, 15) forming, pairwise, angles greater than 90°, one (10) of said clamping elements being disposed along the axis of said central body (16) on one end of a central movable push rod (18), the two other elements (11, 12) being disposed symmetrically with respect to said axis (16) at the distal end of two levers (8, 9) each comprising a clamping arm (33) and an operating arm (34), each one of said levers pivoting by means of the associated end portions of said arms on a support shaft (17) of said central body, characterized in that said push rod (18) is urged, by means of at least one clamping spring (47), in the axial direction of clamping, in that the end portion of the push rod (18) opposite to said clamping element (10) is associated with a first piston (45) adapted to be operated in opposition to said clamping spring (47) and in that each operating arm (34) is elbowed with respect to said clamping arm (33) and is urged rotationally in the direction of clamping by at least one lever spring (52).

2. Grasping and clamping device according to claim 1, characterized in that said operating arms (34) of said levers (8, 9) are each urged by the lever spring (52) to an intermediate position between their support axis (7) and their free end, which is engaged in a groove (40) of an anular sleeve (41), at least partially surrounding said push rod (18).

3. Grasping and clamping device according to claim 2, characterized in that the end portion of said sleeve (41) directed away from said groove (40) is associated with a second piston (48) adapted to be actuated so as to act against said two lever springs (52), and in that the reaction force of said two lever springs (52) applied to said anular sleeve (41) is distinctly higher than the reaction force of said clamping spring (47) applied to said push rod (18).

4. Grasping and clamping device according to any one of claims 1 to 3, characterized in that the push rod (18) is linked to said first piston (45) by a hollow rod (44) in which, at least partially, said clamping spring (47) is housed said clamping spring comprising a helical compression spring one of the ends of which bears on the base (4) of said central body (2) and the other of which bears on said push rod (18).

5. Grasping and clamping device according to anyone of claims 2 to 4, characterized in that said anular sleeve (41) carries a tab or rod (55) engaged in an axial groove (54) of said central push rod (18).

6. Grasping and clamping device according to anyone of claims 1 to 5, characterized in that each lever spring (52) is a helical draw spring one end of which is attached to said operating rod (34) and the other end of which is attached to a projecting portion (53) of the base (4) of the central body (2).

7. Grasping and clamping device according to anyone of claims 3 to 6, characterized in that said anular sleeve (41) has a cylindrical passage (42) in which said push rod (18), passing through said second piston (48), moves in a sealed manner, and in that the first and second pistons (45, 48) are arranged in the same cylindrical bore (46) of said central body (2) in order to define, between the two pistons and externally of said hollow rod (44) an anular fluid chamber (49) in said cylindrical bore (46), adapted to be fed with fluid under pressure for unclamping.

8. Grasping and clamping device according to any one of claims 1 to 7, characterized in that each free end of the clamping arms (33) of said levers (8, 9) carries a shoe member (27, 28) fitted with a plate in elastomer material (31, 32) for bearing tangentially (14, 15) on said workpiece (1, 1a), and pivoting at the end portion of said clamping arm (33).

9. Clamping device according to claim 8, characterized in that each shoe member (27, 28) pivots at the end portion of a connecting roll (37) the other end of which pivots on said central body (2), whereby an orientation of said shoe member is determined for all positions of said clamping arm (33).

10. Clamping device according to anyone of claims 1 to 9, characterized in that the central clamping element (10), mounted at the end portion of said push rod (18), comprises a central pivoted jaw (19) on which two jaws (23, 24; 25, 26) adapted to move out of the way by rotation relative to said central jaw (19) are mounted laterally at both sides, the elastomer contact linings (10b, 10c) of the outer jaws (23, 25) being arranged to come into tangential contact with large diameter workpieces (1) and the elastomer contact linings (10d, 10e) of the inner jaws (24, 26) being arranged to come into tangential contact with small diameter workpieces (1a), whereby, to large diameter workpieces (1), said central jaw and the outer jaws (23, 25) are applied, and to small diameter workpieces (1a), said central jaw (19) and the two internal jaws (24, 26) are applied.
